# EUROPÄISCHE PATENTSCHRIFT

(11) **EP 1 962 488 B1**
(45) Veröffentlichungstag und Bekanntmachung des Hinweises auf die Patenterteilung: **24.02.2016**
(21) Anmeldenummer: 07033578.1
(22) Anmeldetag: 07.12.2007
(51) Int. Cl.: H04N 1/195, G01C 11/02, G06T 7/00, G01C 25/00

(54) **Vorrichtung zur Kalibrierung von Zeilenkameras**
Device for calibrating line scan cameras
Dispositif de calibrage d'une caméra à balayage

(30) Priorität: 22.02.2007 DE 102007009664
(43) Veröffentlichungstag der Anmeldung: 27.08.2008
(73) Patentinhaber: Jena-Optronik GmbH, 07745 Jena (DE)
(72) Erfinder: Fritsch, Holger, Dr., 07749 Jena (DE); Kirschstein, Steffen, 07751 Zöllnitz (DE); Voß, Burkart, Prof. Dr., 07778 Dorndorf (DE)
(74) Vertreter: Freitag, Joachim

(56) Entgegenhaltungen:
- WO-A-03/021187
- WO-A-03/077539
- JP-A- 9 065 208
- JP-A- 2004 257 769
- JP-A- 2005 106 642
- US-A- 4 965 448
- US-A1- 2002 012 071
- US-A1- 2002 041 383
- US-A1- 2004 105 090
- US-A1- 2005 280 709

## Beschreibung

Die Erfindung betrifft eine Vorrichtung zur Kalibrierung von Zeilenkameras, insbesondere für die Fernerkundung der Erde aus einer Flugbahn, bei denen eine fortlaufende Bildaufnahme durch zeilenweise Abtastung mittels einer Sensorzeile und gleichzeitige relative Bewegung zwischen der Sensorzeile und einer Szene erzeugt wird. Sie wird vorzugsweise in bildgebenden Instrumenten zur Fernerkundung der Erde angewandt und dient der verbesserten quantitativen Bildanalyse, insbesondere zur hochgenauen Bestimmung von thermischen Bildparametern.

Insbesondere in Instrumenten zur Fernbeobachtung der Erde aus dem Weltraum werden zunehmend Kamerasysteme eingesetzt, bei denen die Flugbewegung des Kameraträgers dazu genutzt wird, eine eindimensional ausgedehnte Sensorzeile quer zur Flugrichtung über ein zu beobachtendes Gebiet zu bewegen und damit eine zweidimensionale optische Bildaufnahme ohne zusätzliche mechanische Scanbewegung der Sensorzeile zu erzeugen. Damit lassen sich extrem robuste und zuverlässige Bildaufnahmesysteme realisieren.
Nachteilig an dem Bildaufnahmeprinzip von Zeilenkameras ist, dass - insbesondere bei Beobachtungsaufgaben aus dem All - eine erforderliche regelmäßige Neukalibrierung des Systems nach dem Stand der Technik nicht ohne eine zeitweilige Unterbrechung des Strahlengangs von der zu beobachtenden Bodenszene zum Sensor möglich ist. Damit wird jedoch die kontinuierlich fortschreitende Bildaufnahme der Erdoberfläche unzulässig unterbrochen. Solche Unterbrechungen werden besonders dann kritisch, wenn sie häufiger erfolgen müssen, als unbedeutende Abbildungsszenen (z.B. homogene Wasseroberflächen) zur Verfügung stehen.
Insbesondere bei Aufnahmen im thermischen Infrarot des elektromagnetischen Spektrums (> 3 µm) sind wegen der Temperaturdrift und des 1/f-Rauschens der verwendeten Sensoren sehr häufige Kalibrierungen notwendig, während deren Dauer keine Nutzdatenerfassung möglich ist.

Für die Erfassung von geologischen Oberflächen mit flugzeuggestützten Kameras sind in der US 20040105090 A1 ein Verfahren und eine Vorrichtung zur Aufnahme, Ortung und Messung schräger Bildaufnahmen beschrieben, bei denen die Vielzahl der schräg aufgenommenen Bilder einem Computersystem zugeführt werden, um aus der daraus erstellten Datenbank anwenderbezogene Positionsdaten, wie lineare Abstände, Flächeninhalte, relative Höhen und Höhendifferenzen, aus der Oberflächenszene zu berechnen. Die dabei verwendete Kamerakonfiguration von schrägen Blickrichtungen sorgt für eine breit gefächerte Oberflächenaufnahme mit Höhenprofil, redundante (überlappende) Bildaufnahmen müssen jedoch durch mehrfache Überflüge mit entsprechendem Versatz erzeugt werden, wodurch erhebliche zeitliche Differenzen beispielsweise für unterschiedliche Beleuchtungssituationen sorgen, die, da keinerlei Kalibrierung vorgesehen ist, radiometrisch nicht verwertbar sind.

Für eine ähnliche Aufgabenstellung der räumlich vermessenden Bildaufnahme ist aus der US 2005/0280709 A1 ein Kalibrierverfahren bekannt, das eine transparente Kalibriereinrichtung mit mehreren sich kreuzenden parallelen Rasterliniensystemen benutzt, um deren Kreuzungspunkte als definierte Indikatorpunkte im Abbild der Szene zu überlagern. Eine solche Kalibrierung ist allein für geometrische Bildmessaufgaben relevant. Da die Bildaufnahmen mit Matrixkameras ohne Relativbewegung der Szene erfolgen, führt diese Kalibrierung zu keinem wiederkehrenden Nutzdatenverlust. Die zusätzlich offenbarte Zweikameraanordnung dient allein der Unterdrückung der Rasterlinien, die bei der Verfolgung von bewegten Objekten in der aufgenommenen Szene stören würden. Eine radiometrische Kalibrierung ist dabei nicht vorgesehen.

Aus der US 2002/0012071 A1 ist eine Mehrkameraanordnung bekannt, wobei Daten zur radiometrischen Kalibrierung erfasst werden. ¶

Für terrestrische Anwendungen (z.B. Wärmebildkameras) sind Kalibriermethoden bekannt, die einen so genannten Chopper nutzen, um wiederholt den Abbildungsstrahlengang abzuschatten.
Der Chopper unterbricht periodisch die Nutzdatenaufnahme durch Einblenden einer dunklen Fläche in den Strahlengang. Ist die Abstrahlung dieser Fläche bekannt, so ist eine häufige (Ein-Punkt-)Kalibrierung möglich.
In der Regel ist ein solcher Chopper als eine rotierende Scheibe implementiert, die Durchbrüche für die Aufnahme der Szene besitzt. Diese Scheibe ist entweder direkt vor dem optischen System oder zwischen dem optischen System und dem Bildsensor positioniert. Die dabei ebenfalls auftretende Diskontinuität der Bilddatenerfassung ist bei terrestrischen Anwendungen jedoch völlig unproblematisch, da Wärmebildkameras einerseits zur Aufnahme von Thermobildsequenzen mit einer Aufnahmefrequenz arbeiten, die es erlaubt, die Kalibrieraufnahmen auszublenden und andererseits bei Einzelaufnahmen nicht bewegter Objekte ebenfalls genügend Zeit für eine Kalibrieraufnahme ohne Nutzdatenverlust möglich ist.

Im Gegensatz dazu ist die beschriebene Diskontinuität bei einem Instrument zur Erdbeobachtung wegen der sich ständig unter Kamera fortbewegenden Szene sehr problematisch. Aus diesem Grund werden derzeit Zeilenkameras (sog. Pushbroom-Scanner) nicht als Infrarot-Radiometer eingesetzt. Im Stand der Technik verwendete hochgenaue Infrarot-Radiometer sind bisher genau kalibrierbare lineare Scanner-Systeme, wie z.B. AVHRR auf dem Satellit METOP und AATSR auf dem Satellit Envisat, oder aber Rotationsscanner (sog. Whiskbroom-Scanner), wie beispielsweise auf dem Satellit Landsat. Bei diesen Scannersystemen gibt es feststehende Kalibrierquellen, die durch linear bewegte oder rotierende optische Elemente zyklisch in die mechanisch punktweise Abtastbewegung zur Aufnahme der überflogenen Szene fest eingebunden sind. Nachteilig sind dabei vor allem die relativ schnell bewegten optischen Komponenten.

Als Zeilenkameras ausgeführte IR-Instrumente (ohne bewegte optische Komponenten) können deshalb nicht der Anforderung genügen, da sie, wenn sie eine regelmäßige (bzw. häufige) Kalibrierung realisieren, nicht permanent die Szene beobachten können, um eine ununterbrochene Bildaufnahme zu erhalten.
Um dennoch das Kalibrierproblem für Zeilenkameras zu lösen, besitzt z.B. ein zur Feuerbeobachtung konzipierter Kleinsatellit BIRD vor der Aufnahmeöffnung einer Zeilenkamera eine Klappe, mit der ein thermisches Standardsignal erzeugt wird. Mit dieser Klappe wird immer dann die Aufnahmeöffnung zur Kalibrierung verschlossen, wenn eine Beobachtungsunterbrechung für die Anwendung keinen wesentlichen Informationsverlust darstellt, d.h. für die Feuerbeobachtung beim Überfliegen von Flächen, auf denen kein Feuer erwartet wird (z.B. Wasserflächen der Ozeane).
Über Landeflächen soll aber eine möglichst hohe Verfügbarkeit (ununterbrochene Bildaufnahme) gegeben sein. Hohe Verfügbarkeit verbietet jedoch häufiges Kalibrieren. Verminderte Kalibrierhäufigkeit reduziert wiederum aufgrund der oben beschriebenen Unzulänglichkeiten der Sensoren (Temperaturdrift und 1/f-Rauschen) die erzielbare radiometrische Genauigkeit der aufgenommenen Bilddaten. Radiometrische Genauigkeit und hohe Verfügbarkeit stehen für diesen Einsatzfall von Zeilenkameras also in konträrem Verhältnis zueinander.

Der Erfindung liegt die Aufgabe zugrunde, eine neue Möglichkeit zur radiometrischen Kalibrierung von Zeilenkameras, bei denen eine fortlaufende Bildaufnahme durch zeilenweise Abtastung mittels einer Sensorzeile und gleichzeitige relative Bewegung zwischen der Sensorzeile und einer Szene erzeugt wird, zu finden, die eine häufige Kalibrierung gestattet, ohne dass die Bildaufnahme unterbrochen wird.

Erfindungsgemäß wird die Aufgabe bei einer Vorrichtung zur radiometrischen Kalibrierung von Zeilenkameras, bei der eine fortlaufende Bildaufnahme durch zeilenweise Abtastung mittels einer Sensorzeile und gleichzeitige relative Bewegung zwischen der Sensorzeile und einer Szene erzeugt wird, dadurch gelöst, dass mindestens zwei optische Bildaufnahmeeinheiten zur kontinuierlichen Bilddatenerfassung derart benachbart angeordnet sind, dass sie im Zuge der relativen Bewegung zwischen Szene und Sensorzeile während eines Überstreichens der Szene dieselben Bilddaten aufnehmen, und dass mindestens eine bewegliche Kalibrierplatte zur wiederholten Bereitstellung mindestens eines definierten Strahlungsetalons für die radiometrische Kalibrierung jedes an der Bildaufnahme beteiligten Elements der Sensorzeile vorhanden ist, wobei die Kalibrierplatte regelmäßig wiederkehrend zeitweise den Abbildungsstrahlengang wenigstens einer der Bildaufnahmeeinheiten mindestens teilweise abschattet, während wenigstens eine weitere Bildaufnahmeeinheit zur ungehinderten Abtastung der derselben überstrichenen Szene frei ist.

Vorteilhaft ist mindestens eine Kalibrierplatte in die Strahlengänge mehrerer Bildaufnahmeeinheiten einfügbar, wobei jedoch zu jedem beliebigen Zeitpunkt mindestens eine der Bildaufnahmeeinheiten zur ungehinderten Abtastung der überstrichenen Szene frei ist.
Zweckmäßig ist des Weiteren, dass mindestens eine Kalibrierplatte nur in den Strahlengang genau einer Bildaufnahmeeinheit einfügbar ist und für weitere Bildaufnahmeeinheiten eine Bild-zu-Bild-Kalibrierung auf Basis der gleichen aufgenommenen Bilddaten durchgeführt wird.
Es erweist sich als vorteilhaft, wenn mehrere Kalibrierplatten mit Strahlern gleicher Strahlungsintensität nacheinander in den Strahlengang mindestens einer Bildaufnahmeeinheit zeitweise einschwenkbar sind, um eine Einpunktkalibrierung durchzuführen. Dadurch wird eine niedrige Bewegungsgeschwindigkeit der Kalibrierplatten erreicht.
Ferner ist es zweckmäßig, wenn mehrere Kalibrierplatten unterschiedlicher Strahlungsintensität nacheinander in den Strahlengang mindestens einer Bildaufnahmeeinheit zeitweise einschwenkbar sind, um eine Mehrpunktkalibrierung durchzuführen.

Die mindestens eine Kalibrierplatte ist vorteilhaft in einem Kalibrierplattenträger angeordnet, mit dem die Kalibrierplatte zu definierten Zeiten in den Strahlengang mindestens einer der Bildaufnahmeeinheiten hinein bewegbar ist.
Dabei kann die mindestens eine Kalibrierplatte zweckmäßig in einer linearen Verschiebeeinheit oder einem Klappenmechanismus, bei dem die mindestens eine Kalibrierplatten um eine in Parallelrichtung zur Kalibrierplatten ausgerichtete Drehachse drehbar gelagert ist, angeordnet sein.
Vorteilhaft können mehrere Kalibrierplatten an jeweils einer in Parallelrichtung zur Kalibrierplatte ausgerichteten Drehachse befestigt werden, wobei die Kalibrierplatten zu verschiedenen Zeiten um ihre individuelle Drehachse in den Strahlengang mindestens einer der Bildaufnahmeeinheiten einklappbar sind.

Ferner ist es zweckmäßig, die mindestens eine Kalibrierplatte um eine in Orthogonalrichtung zur Kalibrierplatte ausgerichtete Drehachse drehbar haltern. Dabei können auch mehrere Kalibrierplatten an mindestens einer in Orthogonalrichtung zur Kalibrierplatte ausgerichteten Drehachse vorteilhaft befestigt werden, wobei die Kalibrierplatten in einer Art Pendelbewegung zu unterschiedlichen Zeiten in den Strahlengang mindestens einer der Bildaufnahmeeinheiten einschwenkbar sind.
Des Weiteren ist es besonders vorteilhaft mehrere Kalibrierplatten als Flügel eines Flügelrades auszubilden, wobei die Kalibrierplatten zeitlich nacheinander mindestens in den Strahlengang mindestens einer der Bildaufnahmeeinheiten eindrehbar sind. Dabei kann das Flügelrad mit konstanter Winkelgeschwindigkeit oder schrittweise rotiert werden.

Ein weitere vorteilhafte Ausführung besteht darin, dass der Kalibrierplattenträger Kalibrierplatten in Form von Spiegelflächen aufweist, die eine Einspiegelung von neben den Bildaufnahmeeinheiten angeordneten Strahlern in den Strahlengang der Bildaufnahmeeinheit gestatten.
Ferner ist es sinnvoll, wenn der Kalibrierplattenträger Kalibrierplatten in Form von Filtern mit unterschiedlicher Transmission aufweist, mit denen mittels der im Bildstrahlengang der Bildaufnahmeeinheiten einfallenden Strahlung eine relative Kalibrierung vorgesehen ist.

Es ist weiterhin zweckmäßig, dass mindestens eine Kalibrierplatte mit mindestens einer Lichtquelle zur Erzeugung einer definierten Kalibrierstrahlung versehen ist. Eine weitere vorteilhafte Variante besteht darin, dass die Kalibrierplatten mit fluoreszierendem Material beschichtet sind, das durch einen geeigneten separat angeordneten Strahler zur Erzeugung einer definierten Kalibrierstrahlung angeregt wird. Weitere geeignete Gestaltungen sehen vor, dass die Kalibrierplatte durch geeignete separat angeordneten Wärmestrahler bestrahlt, auf elektromagnetischem Wege oder durch elektrischen Stromfluss erwärmt wird.

Um eine hohe Konstanz und Zuverlässigkeit der Kalibrierung zu erreichen, ist vorteilhaft ein Strahlungssensor zur Messung der von der Kalibrierplatte abgegebenen Strahlungsintensität vorhanden. Zweckmäßig ist dazu ein Temperatursensor zur Messung der Oberflächentemperatur der mindestens einen Kalibrierplatte vorgesehen.
Zusätzlich kann ein Schwarzkörper zur Kalibrierung des IR-Temperatursensors so angeordnet werden, dass dessen Strahlung über eine verspiegelte Kalibrierplatte auf den IR-Temperatursensor eingespiegelt wird.
Zur Einspiegelung der Strahlung des Schwarzkörper auf den IR-Temperatursensor wird besonders vorteilhaft ein verspiegelter Flügel eines mit Kalibrierplatten bestückten Flügelrades verwendet, wodurch eine zyklische Eichung der Kalibrierplattentemperatur möglich ist.
Es erweist sich als Vorteil, einen Temperatursensor zur direkten Messung der Oberflächentemperatur auf mindestens einer Kalibrierplatte anzubringen.

Die Erfindung basiert auf der Grundüberlegung, dass eine Szene (z.B. Erdoberfläche), die mittels einer Zeilenkamera durch fortschreitende Bewegung (der Szene oder der Kamera) bildmäßig abgetastet wird, regelmäßig wiederkehrend durch ein Kalibriernormal (Etalon) abgeschattet werden muss, um eine geforderte Kalibriergüte (Messgenauigkeit innerhalb der Bildaufnahme) einzuhalten. Dabei ist es jedoch nicht tolerierbar, dass in der beobachteten Szene Abtastlücken (Datenverluste) entstehen. Deshalb werden mindestens zwei optische Bildaufnahmeeinheiten (Zeilenkameras) verwendet, von denen wenigstens eine ungehindert Bilddaten (Nutzdaten) während der Zeit aufnimmt, in der eine andere Bildaufnahmeeinheit zur Kalibrierung abgedeckt ist. Die Bildaufnahmeeinheiten, die - gegebenenfalls zeitlich versetzt und/oder mit unterschiedlicher Auflösung - dieselbe Szene "sehen", garantieren bei redundantem Betriebsregime, dass zu jedem Zeitpunkt mindestens eine Bildaufnahmeeinheit die Szene beobachtet und somit Nutzdaten aufnimmt, während in einer anderen ein Kalibriernormal eingeschwenkt ist. Da die optischen Bildaufnahmeeinheiten zeitweise (ggf. zu unterschiedlichen Zeitpunkten) dieselbe Szene beobachten, ist entweder eine Kalibrierung durch Bild-zu-Bild-Kalibrierung oder alternativ auch die abwechselnde Einblendung eines Kalibriernormals in jeden der Strahlengänge der Bildaufnahmeeinheiten möglich. Dabei wird die erforderliche Kalibrierfrequenz durch die Zuverlässigkeitsanforderungen an die Kalibrierung und durch das Rauschverhalten der Sensoren (1/f-Rauschen und Temperaturdrift) bestimmt. Werden Kalibriernormale mit unterschiedlicher Abstrahlungscharakteristik eingesetzt, kann vorteilhaft eine Mehrpunktkalibrierung realisiert werden. Möglichkeiten zur Mehrpunktkalibrierung sind beispielsweise in der nicht vorveröffentlichten Patentanmeldung DE 10 2006 043 385 offenbart, die durch Bezugnahme in die vorliegende Erfindung mit einbezogen sein sollen.
Um die Kalibrierung in der Genauigkeit zu steigern und konstant zu halten, kann eine zusätzliche Temperaturmessung der Kalibriernormale durch einen zusätzlichen Sensor erfolgen, der die von der Kalibrieroberfläche abgestrahlte Energie misst. Auf den Kalibriersensor muss dazu in regelmäßigen kurzen Abständen ein langzeitstabiler Schwarzkörper mit bekanntem Abstrahlverhalten (Etalon) abgebildet werden. Das wird zweckmäßig dadurch realisiert, dass auf gleicher Achse der eingeschwenkten Kalibriernormale ein Spiegel zur Einspiegelung des Etalons auf den Temperatursensor vorgesehen ist.

Mit der Erfindung ist es möglich, für Zeilenkameras, bei denen eine fortlaufende Bildaufnahme mit durch Bewegung einer Szene zur Sensorzeile erzeugten Zeilenabtastung erfolgt, eine beliebig häufige Kalibrierung zu realisieren, ohne dass dazu die Bildaufnahme unterbrochen werden muss. Weiterhin kann die Kalibrierung problemlos zu einer Mehrpunktkalibrierung erweitert und mit einem Etalonabgleich zusätzlich stabilisiert werden.

Die Erfindung soll nachstehend anhand von Ausführungsbeispielen näher erläutert werden. Die Zeichnungen zeigen:
- Fig. 1:: eine Prinzipdarstellung der Erfindung mit zwei Bildaufnahmeeinheiten und einem beweglichen Kalibrierplattenträger, der beide Bildaufnahmeeinheiten alternativ zeitweise abdecken kann.
- Fig. 2:: eine stilisierte Darstellung des Abtastprinzips einer zur Erdbeobachtung eingesetzten Zeilenkamera (sog. Pushbroom-Scanner) bei herkömmlichem Betriebsregime mit nur einer optischen Bildaufnahmeeinheit,
- Fig. 3:: eine Ausgestaltung der Erfindung mit einer Kalibrierplatte, die eine konstante Rotationsbewegung ausführt und wahlweise zwei Bildaufnahmeeinheiten abdecken kann,
- Fig. 4:: eine Ausführung der Erfindung mit einer Kalibrierplatte, die eine Translationsbewegung ausführt und wahlweise zwei Bildaufnahmeeinheiten nacheinander abdecken kann,
- Fig. 5:: eine Zusammenstellung von alternativen Ausführungsformen, die nur eine der Bildaufnahmeeinheiten abdeckt und bei denen die andere Bildaufnahmeeinheit durch eine Cross-Kalibrierung über dieselbe beobachtete Szene kalibriert wird,
- Fig. 6:: eine weitere Gestaltung der Erfindung, bei der Kalibrierplatten als mechanische Klappen eingeklappt werden.
- Fig. 7:: eine Zusammenstellung von alternativen Ausführungsformen der Kalibriereinheit, bei denen durch mehrere Kalibrierplatten mit jeweils unterschiedlicher Strahlungsintensität eine Mehrpunktkalibrierung erfolgen kann.
- Fig. 8:: eine Ausführung der Erfindung für eine absolute Kalibrierung durch eine Oberflächentemperaturmessung mittels eines IR-Sensors, der über einen Temperaturetalon (Schwarzkörper) kalibriert wird.
- Fig. 9:: eine Ausführung der Erfindung mit absoluter Kalibrierung für eine Mehrpunktkalibrierung des Temperatursensors mittels eines Temperaturetalons (Schwarzkörpers),
- Fig. 10:: zwei konstruktive Ausführungsvarianten, mit denen Energie in den beweglichen Kalibrierplattenträger a) über eine induktive Spannungsübertragung in eine Sekundärspule zur Widerstandsheizung der Kalibrierplatten und b) über eine Wirbelstrominduktion in jeder einzelnen vorbeikommenden Kalibrierplatte übertragen wird.

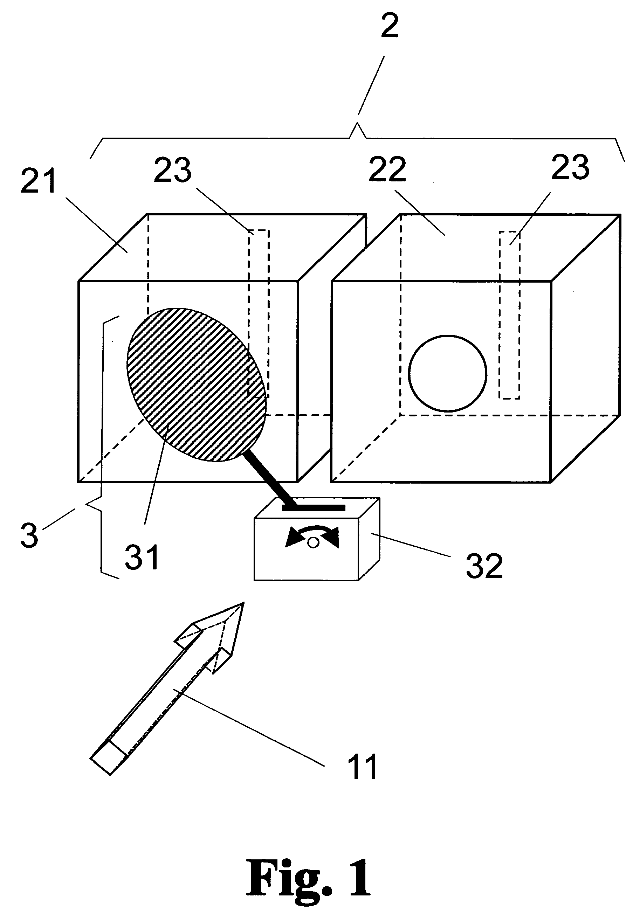

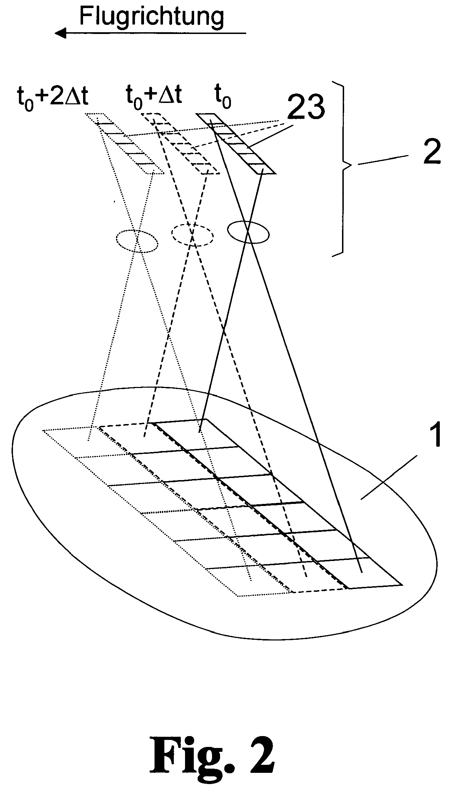

Die Vorrichtung zur Kalibrierung von Zeilenkarrieras, bei denen eine fortlaufende Bildaufnahme durch zeilenweise Abtastung mittels einer Sensorzeile und gleichzeitige relative Bewegung zwischen der Sensorzeile und einer Szene erzeugt wird, besteht in ihrem Grundaufbau gemäß Fig. 1 aus einem Zeilenkamerasystem 2 mit mindestens zwei Bildaufnahmeeinheiten 21 und 22, zum Aufnehmen einer Szene 1, vorzugsweise einer beobachteten Szene der Erdoberfläche (nur in Fig. 2 dargestellt) sowie einer Kalibriereinheit 3 mit wenigstens einer Kalibrierplatte 31 und einem Kalibrierplattenträger 32 zum Bewegen der Kalibrierplatten 31. Die Kalibrierplatte(n) 31 sind so in die Aufnahmestrahlengänge der Bildaufnahmeeinheiten 21 und 22 einschwenkbar, dass bei (ohne Beschränkung der Allgemeinheit hier: vollständiger) Abschattung einer Bildaufnahmeeinheit 21 stets die andere Bildaufnahmeeinheit 22 (und umgekehrt) für die Bildaufnahme frei bleibt.
Das Aufnahmeprinzip jeder der Bildaufnahmeeinheiten 21 und 22 (Zeilenkamerasystem 2) ist schematisch in Fig. 2 für den Anwendungsfall der Fernerkundung der Ende gezeigt. Dabei kommt eine lückenlose Bildaufnahme durch die zeilenweise Abtastung mittels einer Sensorzeile 23 zustande, indem sich in der Szene 1 (Erdoberfläche) deren Gesichtsfeld, das für Zeitpunkte t₀ (durchgezogene Linie), t₀+Δt (gestrichelt) und t₀+2Δt (gepunktet) dargestellt ist, sukzessive durch eine überlagerte Flugbewegung verschiebt.
Dasselbe Funktionsprinzip ergibt sich aber auch für eine bewegte Szene 1 (z.B. Förderband) bei ruhendem Zeilekamerasystem 2.

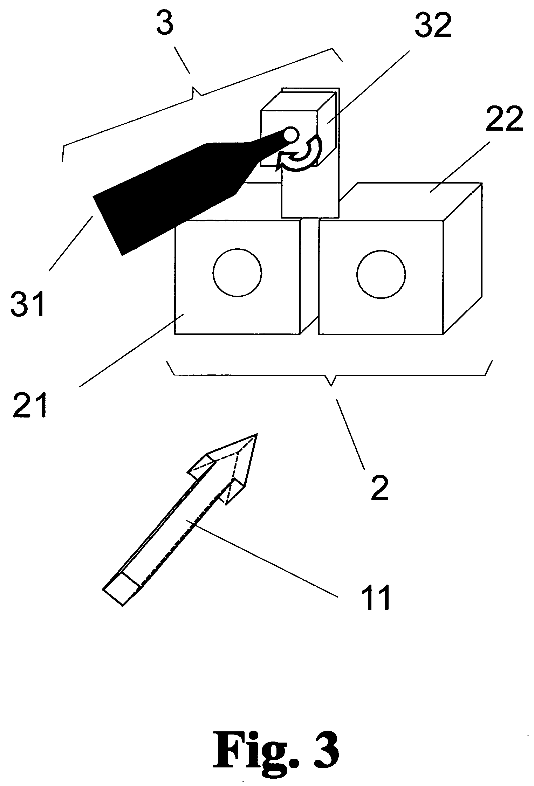

In einer ersten Ausführung der Erfindung (siehe Fig. 1) sind zwei Bildaufnahmeeinheiten 21 und 22 angeordnet, von denen zu jedem beliebigen Zeitpunkt höchstens eine von einer Kalibrierplatte 31, die auf einem beweglichen Kalibrierplattenträger 3 montiert ist, abgeschattet sein kann. Damit ist gewährleistet, dass mindestens eine Bildaufnahmeeinheit zur Nutzdatenerfassung zur Verfügung steht.
Die Bewegung der Kalibrierplatten 31 kann beliebig realisiert sein. Sie kann grundsätzlich als alternierende Pendelbewegung (Fig. 1), als vollständige Rotationsbewegung (Fig. 2) oder Translationsbewegung (Fig. 3) ausgeführt sein, um die Kalibrierplatten 31 in den Strahlengang einer oder mehrerer Bildaufnahmeeinheiten 21, 22 zeitweilig einzufügen.
Befindet sich im Strahlengang einer Bildaufnahmeeinheit 21, 22 eine Kalibrierplatte 31, kann die von der Kalibrierplatte 31 abgestrahlte und als bekannt vorausgesetzte Strahlungsintensität benutzt werden, um das von der Bildaufnahmeeinheit durch Umwandlungsprozesse erzeugte meist elektrische Signal dieser bekannten Flussdichte zuzuordnen. Diese absolute Anbindung des Messwertes an eine physikalische Größe (Strahlungsintensität, Temperatur, Albedo) soll in der vorliegenden Erfindung als Kalibrierung verstanden werden.
Dabei können folgende Zustände wiederholt eingestellt werden:
1. Die Aufnahmeeinheit 21 nimmt ungehindert die Erdszene 1 (nur in Fig. 1 gezeigt, sonst vereinfacht durch Pfeil stilisiert als einfallende Szenenstrahlung 11 dargestellt) auf und die Aufnahmeeinheit 22 wird von einer Kalibrierplatte 31 abgedeckt.
2. Beide Aufnahmeeinheiten 21 und 22 stehen zur Bilddatenaufnahme von der Erdszene 1 zur Verfügung.
3. Die Aufnahmeeinheit 21 ist von einer Kalibrierplatte 3 verdeckt und die Aufnahmeeinheit 22 "sieht" die Erdszene 1.

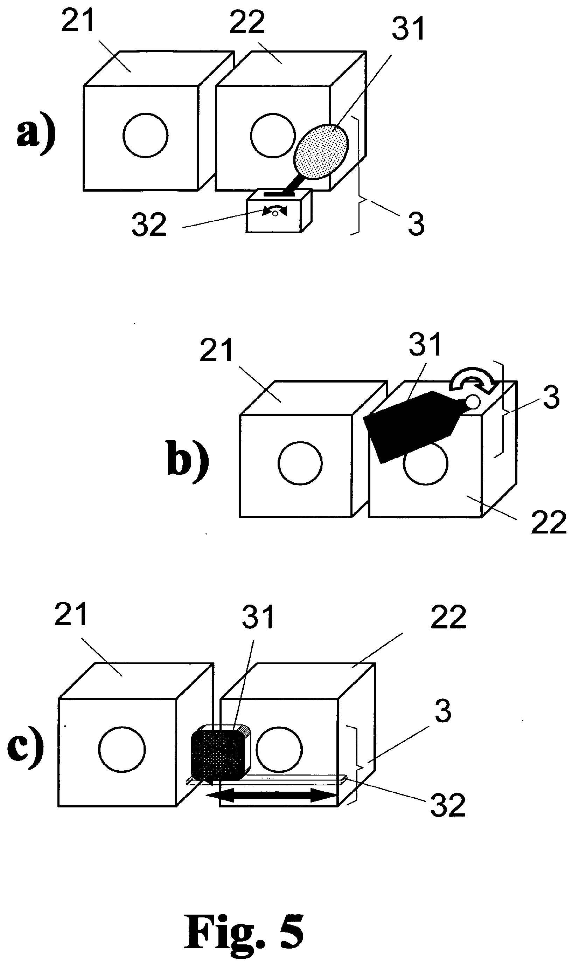

In einer zweiten Ausführung der Erfindung gemäß Fig. 5 sind zwei Bildaufnahmeeinheiten 21 und 22 angeordnet, von denen jeweils nur die Bildaufnahmeeinheit 22 wiederholt von einer Kalibrierplatte 3 mit Hilfe der in dem ersten Ausführungsbeispiel beschriebenen Bewegungen abgedeckt wird. Die andere Bildaufnahmeeinheit 21 wird mittels gleicher beobachteter Ausschnitte aus der beobachteten Szene 1 (siehe Fig. 2) kalibriert, die in den zeitlichen Lücken zwischen den Kalibriervorgängen von der Aufnahmeeinheit 22 abgetastet werden konnten. Damit ist es möglich, die Dimensionen der Kalibriereinheit 3 kleiner zu gestalten. Natürlich können die Kalibrierplatten 31 auch an anderen Stellen des Strahlenganges als vor der Eintrittsöffnung der Bildaufnahmeeinheit(en) 21 und/oder 22 platziert werden, wie etwa direkt vor dem Empfänger (Sensorzeile 23) oder in einer sonstigen geeigneten Stelle.

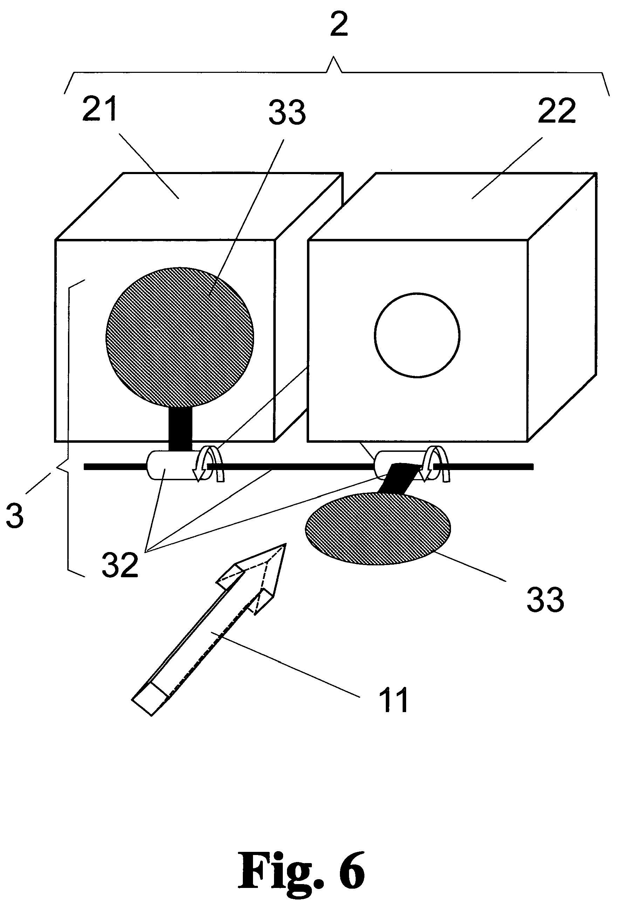

Statt einer Schlittenführung, eines Pendelmechanismus oder eines Flügelrades 35 kann als weitere Ausführungsvariante natürlich auch ein Klappmechanismus eingesetzt werden, mit dem die Kalibrierplatten 31 in den Strahlengang der Bildaufnahmeeinheiten 21, 22 geklappt werden. Dazu sind gemäß Fig. 6 auf drehbaren Kalibrierplattenträgern 32 Kalibrierklappen 33 angebracht, die um eine zur Klappenebene parallele Drehachse in den Strahlengang der Bildaufnahmeeinheiten 21 und 22 eingeschwenkt werden.

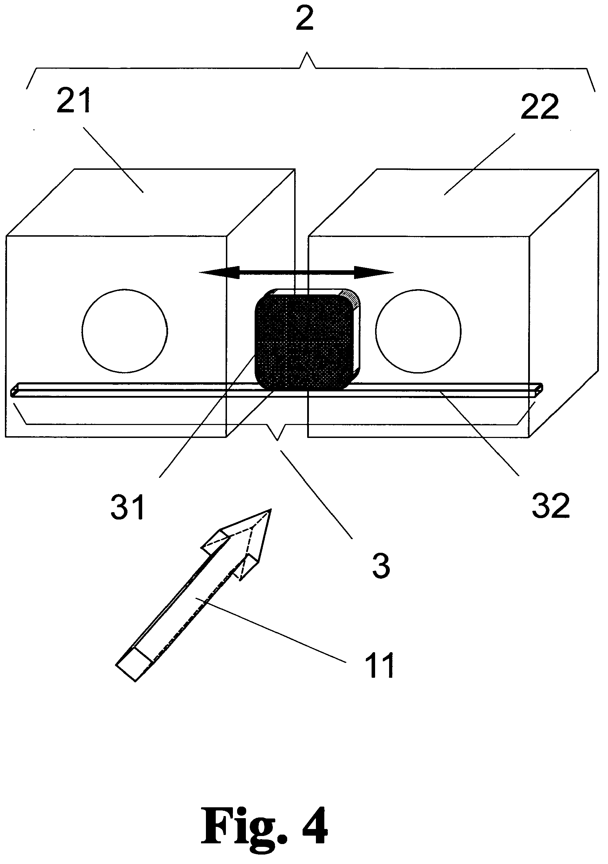

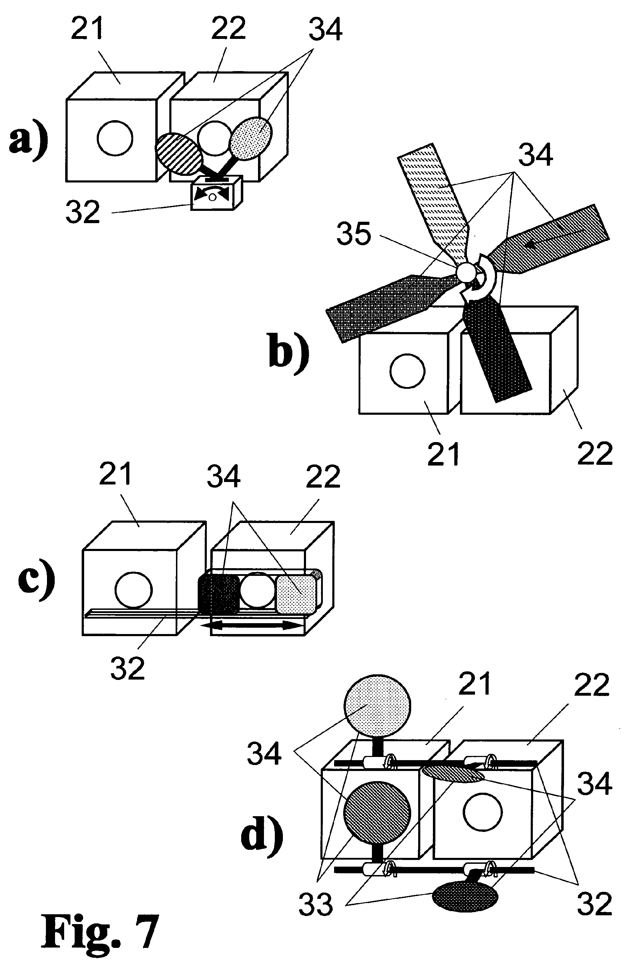

Um die Anforderungen an die Linearität der Sensorelemente der Sensorzeilen 23 zu verringern, ist eine Mehrpunktkalibrierung vorteilhaft. Werden in einer weiteren Ausführung - wie in Fig. 7 für unterschiedliche Ausführungen von Kalibriereinheiten 3 gezeigt - mehrere Kalibrierplatten 31 eingesetzt, wobei letztere unterschiedliche Kalibrierplatten 34 mit verschiedenen Oberflächentemperaturen sind, kann eine Mehrpunktkalibrierung realisiert werden. Das ist mit allen oben zu den Figuren 1, 3, 4 und 5 beschriebenen Bewegungsmechanismen möglich und ist stilisiert in den Teilfiguren 7a bis 7d dargestellt.
Besonders vorteilhaft ist gemäß Fig. 7b die Verwendung eines Flügelrades 33, das zum einen mit einer konstanten Winkelgeschwindigkeit oder zum anderen im Schrittbetrieb die unterschiedlichen Kalibrierplatten 34 aufeinanderfolgend in den Strahlengang beider Bildaufnahmeeinheiten 21 und 22 des Zeilenkamerasystems 2 einbringen kann.
Als Modifikation von Fig. 7b können anstelle der verschiedenen Kalibrierplatten 34 auch alle Flügel des Flügelrades 33 aus gleichen Kalibrierplatten 31, d.h. Kalibrierplatten 31 mit derselben Abstrahlung, gefertigt sein. In diesem Fall kann das Flügelrad 33 deutlich langsamer rotiert werden und ist dadurch bei gleicher Kalibrierfrequenz störunanfälliger.

Für eine absolute radiometrische Kalibrierung muss die von einer Kalibrierquelle abgestrahlte Energie bekannt sein. Im infraroten Spektralbereich ist es ausreichend, die Oberflächentemperatur der abstrahlenden Kalibrierplatten 31 zu kennen.

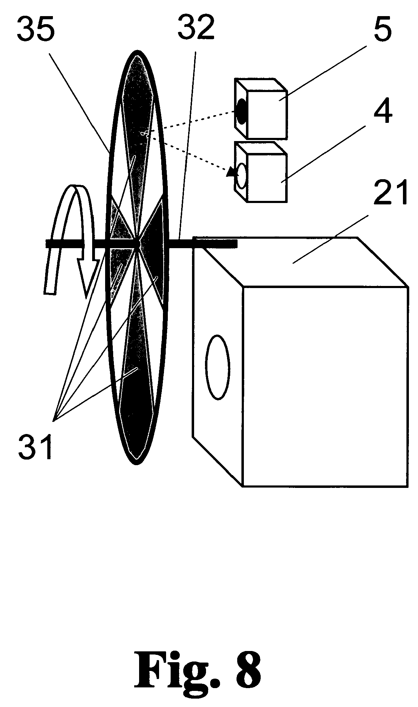

Eine Möglichkeit der Energiemessung der Kalibrierplatten 31 oder verschieden abstrahlender Kalibrierplatten 34 besteht darin, die Oberflächentemperatur mit einem optischen Temperatursensor 4 die von der Oberfläche abgestrahlte Energie zu messen. Dieser Temperatursensor 4 ist vorzugsweise ein IR-empfindlicher Detektor, der über einen Schwarzkörper 5 kalibriert werden muss.
Um den Temperatursensor 4 zu kalibrieren, muss in dessen Gesichtsfeld in regelmäßigen kurzen Abständen ein Schwarzkörper 5 mit genau bekannter Temperaturstrahlung eingeblendet werden. Das wird gemäß Fig. 8 dadurch erzielt, dass eine Kalibrierplatte 31, die vorzugsweise auf einem Flügelrad 34 angebracht ist, teilweise verspiegelt und bei jeder Umdrehung des Flügelrades 34 so zwischen Schwarzkörper 5 und Temperatursensor 4 zu liegen kommt, dass der Ausgang des Schwarzkörpers 5 auf den Temperatursensor 4 projiziert wird.

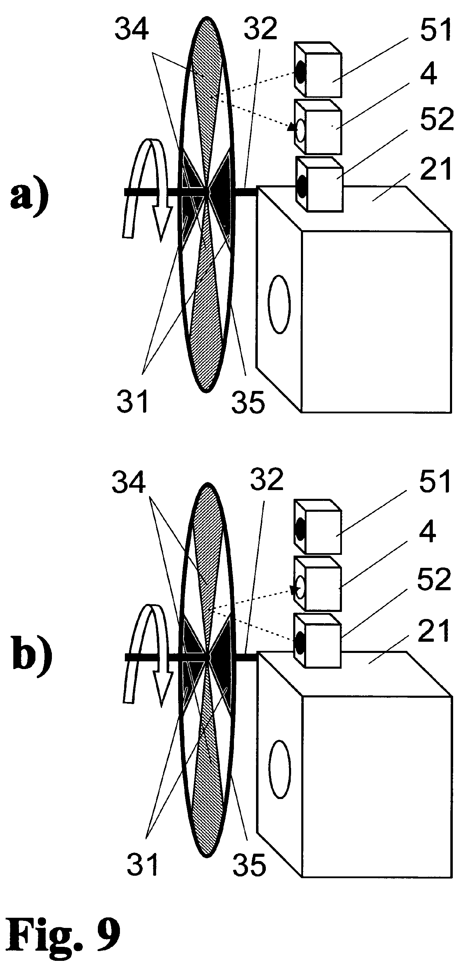

Um die Kalibriergenauigkeit des Temperatursensors 4 zu erhöhen, kann in einer weiteren Ausführung nach Fig. 9 eine Mehrpunktkalibrierung implementiert werden. Dazu müssen entsprechende Kalibrierplatten 34 unterschiedlich verspiegelt und so ausgerichtet sein, dass einmal (Fig. 9a) der Schwarzkörper 51 und nach Drehung des Flügelrades 35 (hier: um 180°, Fig. 9b) ein zweiter Schwarzkörper 52 mit zum ersten Schwarzkörper 51 verschiedener Temperatur in das Gesichtsfeld des Temperatursensors 4 eingespiegelt wird.

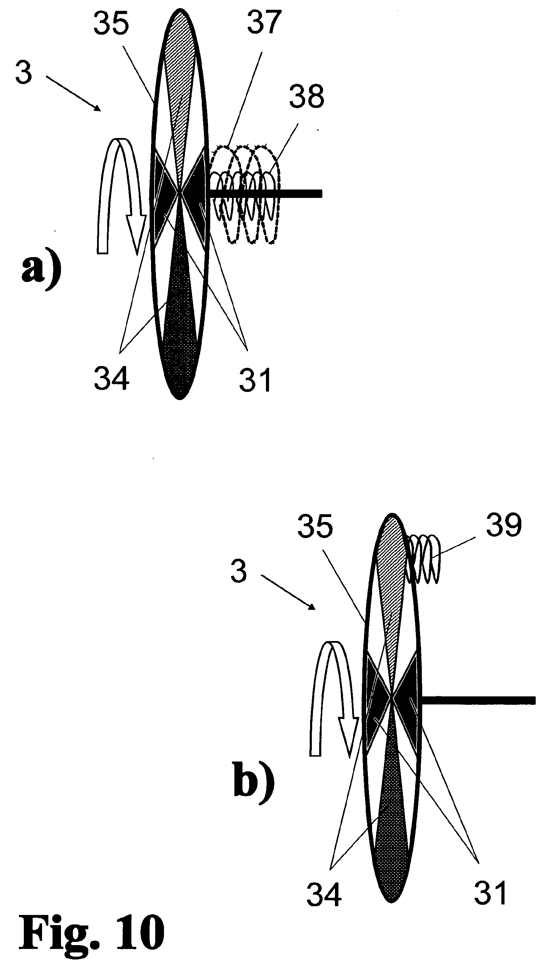

Um unterschiedliche Temperaturen auf den verschiedenen Kalibrierplatten 34 für eine IR-Kalibrierung zu erreichen, muss der Kalibriereinheit 3 Energie zugeführt werden.
Das kann - wie in Fig. 10a für einen Kalibrierplattenträger 32 in Form eines Flügelrades 35 dargestellt - über eine induktive Kopplung erfolgen, bei der an eine Außenspule 37, in der eine am drehbaren Teil des Kalibrierplattenträgers 32 befestigte Innenspule 38 rotiert, eine Spannung angelegt wird, durch die in der Innenspule 37 eine Spannung induziert wird. Mit der induzierten Spannung können Ströme fließen, die in den verschiedenen Kalibrierplatten 34 durch unterschiedliche Heizwiderstände zur Einstellung definierter Temperaturen genutzt werden.

In Fig. 10b ist eine weitere Variante stilisiert dargestellt, bei der mit Hilfe einer feststehenden Spule 39 in der Kalibrierplatte 34 ein Wirbelstrom induziert wird, der die Kalibrierplatte 31 effektiv erwärmt.

Das bisher Gesagte lässt sich teilweise auch auf den sichtbaren Wellenlängenbereich übertragen, wie durch folgende Beschreibung von Ausführungen gezeigt werden soll.

Für einen Kalibriervorgang im sichtbaren Wellenlängenbereich kann ergänzend ein Flügelrad 33 mit Filterplatten 38 unterschiedlicher Transmissionsgrade verwendet werden. Für die Realisierung der Filterplatten 38 mit unterschiedlichen Transmissionsgrade sind in der nicht vorveröffentlichten Patentanmeldung DE 10 2006 043 385 verschiedene Realisierungsmöglichkeiten angegeben.
Durch einen in solcher Art mit Filterplatten 38 bestückten Kalibrierplattenträger 32 als Kalibriereinheit 3 ist eine Differenzmessung zwischen den Bildaufnahmeeinheiten 21 und 22 möglich. In einer Stellung des filterplattenbestückten Flügelrades 33, in der beide Bildaufnahmeeinheiten 21 und 22 (eventuell zu unterschiedlichen Zeiten) dieselbe Szene 1 sehen, können die Bildaufnahmeeinheiten 21 und 22 gegeneinander kalibriert werden. Wird eine Bildaufnahmeeinheit 21 von einer Filterplatte 38 überdeckt, während die andere Bildaufnahmeeinheit 22 frei auf dieselbe Szene 1 blickt, ist eine relative Kalibrierung möglich, d.h. dass Nichtlinearitäten ausgeglichen werden können.
Für eine Absolutkalibrierung, d.h. eine absolute Zuordnung der Wandlungsergebnisse der Sensorzeilen 23 (gemessen am AD-Wandler-Ausgang) zu der eingestrahlten Intensität ist eine weitere Referenz notwendig. Solche Referenzstrahlungsquellen ergeben sich beispielsweise durch die direkte Nutzung der Sonnenstrahlung, eine indirekte Nutzung der Sonnenstrahlung durch Reflexion definierten Teilen der Erdoberfläche mit bekannter bidirektionaler Reflexionsverteilungsfunktion (BRDF) bei bekannter Sonneneinstrahlung oder auch durch Einsatz einer Lichtquelle mit bekanntem Strahlungsverhalten.

### Bezugszeichenliste

- 1: Szene (Erdszene)
- 11: Szenenstrahlung
- 2: Zeilenkamerasystem
- 21, 22: Bildaufnahmeeinheit
- 23: Sensorzeile
- 3: Kalibriereinheit
- 31: Kalibrierplatte
- 32: Kalibrierplattenträger
- 33: (Kalibrier-)Klappe
- 34: Kalibierplatten (unterschiedlicher Abstrahlung)
- 35: Flügelrad
- 36: Außenspule
- 37: Innenspule
- 38: (feste) Spule
- 39: Filterplatte
- 4: Temperatursensor
- 5: Schwarzkörper (Etalon)
- 51, 52: Schwarzkörper (verschiedener Abstrahlung)

## Patentansprüche

1. Vorrichtung zur radiometrischen Kalibrierung von Zeilenkameras, bei der eine fortlaufende Bildaufnahme durch zeilenweise Abtastung mittels einer Sensorzeilen und gleichzeitige relative Bewegung zwischen der Sensorzeile und einer Szene erzeugt wird, wobei
- mindestens zwei optische Bildaufnahmeeinheiten zur kontinuierlichen Bilddatenerfassung derart benachbart angeordnet sind, dass sie im Zuge der relativen Bewegung zwischen Szene und Sensorzeile während eines Überstreichens der Szene dieselben Bilddaten aufnehmen, und
**dadurch gekennzeichnet**, das
- mindestens eine bewegliche Kalibrierplatte zur wiederholten Bereitstellung mindestens eines definierten Strahlungsetalons für die radiometrische Kalibrierung jedes an der Bildaufnahme beteiligten Elements der Sensorzeile vorhanden ist, wobei die Kalibrierplatte regelmäßig wiederkehrend zeitweise den Abbildungsstrahlengang wenigstens einer der Bildaufnahmeeinheiten mindestens teilweise abschattet, während wenigstens eine weitere Bildaufnahmeeinheit zur ungehinderten Abtastung der derselben überstrichenen Szene frei ist.

2. Vorrichtung nach Anspruch 1 **dadurch gekennzeichnet, dass**
die mindestens eine Kalibrierplatte in die Strahlengänge mehrerer Bildaufnahmeeinheiten einfügbar ist, wobei jedoch zu jedem beliebigen Zeitpunkt mindestens eine der Bildaufnahmeeinheiten zur ungehinderten Abtastung der überstrichenen Szene frei ist.

3. Vorrichtung nach Anspruch 1 **dadurch gekennzeichnet, dass**
die mindestens eine Kalibrierplatte nur in den Strahlengang genau einer Bildaufnahmeeinheit einfügbar ist und für weitere Bildaufnahmeeinheiten eine Bild-zu-Bild-Kalibrierung mit aufgenommenen gleichen Bilddaten vorgesehen ist.

4. Vorrichtung nach Anspruch 1, **dadurch gekennzeichnet, dass**
mehrere Kalibrierplatten mit Strahlern gleicher Strahlungsintensität nacheinander in den Strahlengang mindestens einer Bildaufnahmeeinheit zeitweise einschwenkbar sind, um eine Einpunktkalibrierung durchzuführen.

5. Vorrichtung nach Anspruch 1, **dadurch gekennzeichnet, dass**
mehrere Kalibrierplatten unterschiedlicher Strahlungsintensität nacheinander in den Strahlengang mindestens einer Bildaufnahmeeinheit zeitweise einschwenkbar sind, um eine Mehrpunktkalibrierung durchzuführen.

6. Vorrichtung nach Anspruch 1, **dadurch gekennzeichnet, dass**
die mindestens eine Kalibrierplatte in einem Kalibrierplattenträger angeordnet ist, mit dem die Kalibrierplatte zu definierten Zeiten in den Strahlengang mindestens einer der Bildaufnahmeeinheiten bewegbar ist.

7. Vorrichtung nach Anspruch 6, **dadurch gekennzeichnet, dass**
die mindestens eine Kalibrierplatte in einer linearen Verschiebeeinheit angeordnet ist.

8. Vorrichtung nach Anspruch 6, **dadurch gekennzeichnet, dass**
die mindestens eine Kalibrierplatte um eine in Parallelrichtung zur Kalibrierplatte ausgerichtete Drehachse drehbar gelagert ist.

9. Vorrichtung nach Anspruch 8, **dadurch gekennzeichnet, dass**
mehrere Kalibrierplatten an jeweils einer in Parallelrichtung zur Kalibrierplatte ausgerichteten Drehachse befestigt sind, wobei die Kalibrierplatten zu verschiedenen Zeiten um ihre individuelle Drehachse in den Strahlengang mindestens einer der Bildaufnahmeeinheiten einklappbar sind.

10. Vorrichtung nach Anspruch 6, **dadurch gekennzeichnet, dass**
die mindestens eine Kalibrierplatte um eine in Orthogonalrichtung zur Kalibrierplatte ausgerichtete Drehachse drehbar gelagert ist.

11. Vorrichtung nach Anspruch 10, **dadurch gekennzeichnet, dass**
mehrere Kalibrierplatten an mindestens einer in Orthogonalrichtung zur Kalibrierplatte ausgerichteten Drehachse befestigt sind, wobei die Kalibrierplatten in einer Art Pendelbewegung zu unterschiedlichen Zeiten in den Strahlengang mindestens einer der Bildaufnahmeeinheiten einschwenkbar sind.

12. Vorrichtung nach Anspruch 10, **dadurch gekennzeichnet, dass**
mehrere Kalibrierplatten als Flügel eines Flügelrades ausgebildet sind, wobei die Kalibrierplatten zeitlich nacheinander mindestens in den Strahlengang mindestens einer der Bildaufnahmeeinheiten eindrehbar sind.

13. Vorrichtung nach Anspruch 12, **dadurch gekennzeichnet, dass**
das Flügelrad mit konstanter Winkelgeschwindigkeit rotierbar ist.

14. Vorrichtung nach Anspruch 12, **dadurch gekennzeichnet, dass**
das Flügelrad schrittweise rotierbar ist.

15. Vorrichtung nach Anspruch 6, **dadurch gekennzeichnet, dass**
der Kalibrierplattenträger mehrere Kalibrierplatten mit Strahlern gleicher Strahlungsintensität aufweist, die für eine Einpunktkalibrierung vorgesehen sind.

16. Vorrichtung nach Anspruch 6, **dadurch gekennzeichnet, dass**
der Kalibrierplattenträger mehrere Kalibrierplatten mit unterschiedlichen Strahlern aufweist, die für eine Mehrpunktkalibrierung vorgesehen sind.

17. Vorrichtung nach Anspruch 6, **dadurch gekennzeichnet, dass**
der Kalibrierplattenträger Kalibrierplatten in Form von Spiegelflächen aufweist, die eine Einspiegelung von neben den Bildaufnahmeeinheiten angeordneten Strahlern in den Strahlengang der Bildaufnahmeeinheit gestatten.

18. Vorrichtung nach Anspruch 6, **dadurch gekennzeichnet, dass**
der Kalibrierplattenträger Kalibrierplatten in Form von Filtern mit unterschiedlicher Transmission aufweist, mit denen mittels der im Bildstrahlengang der Bildaufnahmeeinheiten einfallenden Strahlung eine relative Kalibrierung vorgesehen ist.

19. Vorrichtung nach Anspruch 1, **dadurch gekennzeichnet, dass**
die mindestens eine Kalibrierplatte mit mindestens einer Lichtquelle zur Erzeugung einer definierten Kalibrierstrahlung versehen ist.

20. Vorrichtung nach Anspruch 1, **dadurch gekennzeichnet, dass**
die mindestens eine Kalibrierplatte mit fluoreszierendem Material beschichtet ist, das durch einen geeigneten separat angeordneten Strahler zur Erzeugung einer definierten Kalibrierstrahlung angeregt wird.

21. Vorrichtung nach Anspruch 1, **dadurch gekennzeichnet, dass**
die mindestens eine Kalibrierplatte durch geeignete separat angeordneten Wärmestrahler bestrahlt wird.

22. Vorrichtung nach Anspruch 1, **dadurch gekennzeichnet, dass**
die mindestens eine Kalibrierplatte auf elektromagnetischem Wege erwärmt wird.

23. Vorrichtung nach Anspruch 1, **dadurch gekennzeichnet, dass**
die mindestens eine Kalibrierplatte durch elektrischen Stromfluss erwärmt wird.

24. Vorrichtung nach Anspruch 1, **dadurch gekennzeichnet, dass**
ein Strahlungssensor zur Messung der von der mindestens einen Kalibrierplatte abgegebenen Strahlungsintensität vorhanden ist.

25. Vorrichtung nach Anspruch 24, **dadurch gekennzeichnet, dass**
ein Temperatursensor zur Messung der Oberflächentemperatur der mindestens einen Kalibrierplatte vorhanden ist.

26. Vorrichtung nach Anspruch 25, **dadurch gekennzeichnet, dass**
mindestens ein Schwarzkörper zur Kalibrierung des IR-Temperatursensors so angeordnet ist, dass dessen Strahlung über eine verspiegelte Kalibrierplatte auf den IR-Temperatursensor eingespiegelt wird.

27. Vorrichtung nach Anspruch 26, **dadurch gekennzeichnet, dass**
zur Einspiegelung der Strahlung des Schwarzkörper auf den IR-Temperatursensor ein verspiegelter Flügel eines mit Kalibrierplatten bestückten Flügelrades vorgesehen ist.

28. Vorrichtung nach Anspruch 26, **dadurch gekennzeichnet, dass**
ein Temperatursensor zur direkten Messung der Oberflächentemperatur auf der mindestens einen Kalibrierplatte angebracht ist.

## Claims

1. Device for radiometric calibration of line scan cameras, in which a continuing image capture is generated by line-by-line scanning by means of a sensor line and simultaneous relative movement between the sensor line and a scene, wherein
- at least two optical image-capturing units for continuous image data acquisition are arranged adjacently in such a way that in the course of the relative movement between the scene and the sensor line during a scanning of the scene they capture the same image data, and
**characterized in that**
- at least one movable calibration plate is provided for repeatedly providing at least one defined radiation etalon for the radiometric calibration of each element of the sensor line involved in the image capture, wherein on a regularly recurring basis the calibration plate temporarily at least partly shades the imaging beam path of at least one of the image-capturing units, while at least one further image-capturing unit is free for unhindered scanning of the same scanned scene.

2. Device according to claim 1, **characterized in that**
the at least one calibration plate is insertable into the beam paths of several image-capturing units, but wherein at any point in time at least one of the image-capturing units is free for unhindered scanning of the scanned scene.

3. Device according to claim 1, **characterized in that**
the at least one calibration plate is only insertable into the beam path of exactly one image-capturing unit and for further image-capturing units an image-to-image calibration with captured equal image data is provided.

4. Device according to claim 1, **characterized in that**
several calibration plates with radiators of equal radiation intensity are temporarily pivotable one after the other into the beam path of at least one image-capturing unit to perform a single-point calibration.

5. Device according to claim 1, **characterized in that**
several calibration plates of different radiation intensity are temporarily pivotable one after the other into the beam path of at least one image-capturing unit to perform a multi-point calibration.

6. Device according to claim 1, **characterized in that**
the at least one calibration plate is arranged in a calibration plate carrier, by which the calibration plate is movable into the beam path of at least one of the image-capturing units at defined times.

7. Device according to claim 6, **characterized in that**
the at least one calibration plate is arranged in a linear displacement unit.

8. Device according to claim 6, **characterized in that**
the at least one calibration plate is mounted so as to be rotatable about a rotational axis oriented in a direction parallel to the calibration plate.

9. Device according to claim 8, **characterized in that**
several calibration plates are each fixed to a rotational axis oriented in a direction parallel to the calibration plate, wherein the calibration plates are pivotable into the beam path of at least one of the image-capturing units about their individual rotational axis at different times.

10. Device according to claim 6, **characterized in that**
the at least one calibration plate is mounted so as to be rotatable about a rotational axis oriented in a direction orthogonal to the calibration plate.

11. Device according to claim 10, **characterized in that**
several calibration plates are fixed to at least one rotational axis oriented in a direction orthogonal to the calibration plate, wherein the calibration plates are pivotable into the beam path of at least one of the image-capturing units in a kind of oscillating movement at different times.

12. Device according to claim 10, **characterized in that**
several calibration plates are formed as blades of a fan, wherein the calibration plates in temporal succession one after the other are rotatable at least into the beam path of at least one of the image-capturing units.

13. Device according to claim 12, **characterized in that**
the fan is rotatable at a constant angular velocity.

14. Device according to claim 12, **characterized in that**
the fan is rotatable in a gradual manner.

15. Device according to claim 6, **characterized in that**
the calibration plate carrier has several calibration plates with radiators of equal radiation intensity which are provided for a single-point calibration.

16. Device according to claim 6, **characterized in that**
the calibration plate carrier has several calibration plates with different radiators which are provided for a multi-point calibration.

17. Device according to claim 6, **characterized in that**
the calibration plate carrier has calibration plates in the shape of mirror surfaces allowing a reflection of radiators arranged beside the image-capturing units into the beam path of the image-capturing unit.

18. Device according to claim 6, **characterized in that**
the calibration plate carrier has calibration plates in the shape of filters of different transmission, by which a relative calibration is provided by means of the radiation incident into the image beam path of the image-capturing units.

19. Device according to claim 1, **characterized in that**
the at least one calibration plate is provided with at least one light source for generating a defined calibration radiation.

20. Device according to claim 1, **characterized in that**
the at least one calibration plate is coated with a fluorescent material, which is excited by a suitable separately arranged radiator for generating a defined calibration radiation.

21. Device according to claim 1, **characterized in that**
the at least one calibration plate is irradiated by suitable separately arranged heat radiators.

22. Device according to claim 1, **characterized in that**
the at least one calibration plate is heated in an electromagnetic way.

23. Device according to claim 1, **characterized in that**
the at least one calibration plate is heated by electrical current flow.

24. Device according to claim 1, **characterized in that**
a radiation sensor is provided for measuring the radiation intensity emitted from the at least one calibration plate.

25. Device according to claim 24, **characterized in that**
a temperature sensor is provided for measuring the surface temperature of the at least one calibration plate.

26. Device according to claim 25, **characterized in that**
at least one blackbody for calibrating the IR temperature sensor is arranged in such a way that the radiation of said blackbody is reflected onto the IR temperature sensor via a mirrored calibration plate.

27. Device according to claim 26, **characterized in that**
for reflecting the radiation of the blackbody onto the IR temperature sensor a mirrored blade of a fan equipped with calibration plates is provided.

28. Device according to claim 26, **characterized in that**
a temperature sensor for directly measuring the surface temperature is fixed on the at least one calibration plate.

## Revendications

1. Dispositif de calibrage radiométrique de cameras linéaires, dans lequel une capture d'image continue est générée par le balayage ligne par ligne au moyen d'une ligne de capteur et un mouvement relatif simultané entre la ligne de capteur et la scène,
- au moins deux unités optiques de capture d'image pour l'acquisition continue de données d'image étant disposées de manière adjacente de telle façon qu'au cours du mouvement relatif entre la scène et la ligne de capteur ils enregistrent les mêmes données d'image pendant un balayage de la scène, et
**caractérisé en ce que**
- au moins une plaque de calibrage déplaçable est prévue pour la mise à disposition répétée d'au moins un étalon de rayonnement défini pour le calibrage radiométrique de chacun des éléments de la ligne de capteur participants à la capture d'image, la plaque de calibrage recouvrant au moins partiellement le trajet de faisceau d'image d'au moins une des unités de capture d'image temporairement de façon récurrente régulièrement, au moins une autre unité de capture d'image étant libre pour le balayage sans encombre de la même scène balayée.

2. Dispositif selon la revendication 1, **caractérisé en ce que**
l'au moins une plaque de calibrage est insérable dans les trajets de faisceau de plusieurs unités de capture d'image, mais à tout moment au moins une des unités de capture d'image étant libre pour le balayage sans encombre de la scène balayée.

3. Dispositif selon la revendication 1, **caractérisé en ce que**
l'au moins une plaque de calibrage n'est insérable que dans le trajet de faisceau d'exactement une unité de capture d'image et un calibrage image à image avec des données d'images égales enregistrées est prévu pour d'autres unités de capture d'image.

4. Dispositif selon la revendication 1, **caractérisé en ce que**
plusieurs plaques de calibrage avec des radiateurs d'intensité de rayonnement égale peuvent être pivotées temporairement l'une après l'autre dans le trajet de faisceau d'au moins une unité de capture d'image pour effectuer un calibrage à un point.

5. Dispositif selon la revendication 1, **caractérisé en ce que**
plusieurs plaques de calibrage d'intensité de rayonnement différente peuvent être pivotées temporairement l'une après l'autre dans le trajet de faisceau d'au moins une unité de capture d'image pour effectuer un calibrage à plusieurs points.

6. Dispositif selon la revendication 1, **caractérisé en ce que**
l'au moins une plaque de calibrage est disposée dans un support de plaque de calibrage, par lequel la plaque de calibrage est déplaçable dans le trajet de faisceau d'au moins une des unités de capture d'image á des moments définis.

7. Dispositif selon la revendication 6, **caractérisé en ce que**
l'au moins une plaque de calibrage est disposée dans une unité de déplacement linéaire.

8. Dispositif selon la revendication 6, **caractérisé en ce que**
l'au moins une plaque de calibrage est montée de façon à pouvoir tourner autour d'un axe de rotation orienté en direction parallèle à la plaque de calibrage.

9. Dispositif selon la revendication 8, **caractérisé en ce que**
plusieurs plaques de calibrage sont chacun fixées à un axe de rotation orienté en direction parallèle à la plaque de calibrage, les plaques de calibrage pouvant être pivotées autour de leur axe de rotation individuel dans le trajet de faisceau d'au moins une des unités de capture d'image á des moments différents.

10. Dispositif selon la revendication 6, **caractérisé en ce que**
l'au moins une plaque de calibrage est montée de façon à pouvoir tourner autour d'un axe de rotation orienté en direction orthogonale à la plaque de calibrage.

11. Dispositif selon la revendication 10, **caractérisé en ce que**
plusieurs plaques de calibrage sont fixées à au moins un axe de rotation orienté en direction orthogonale à la plaque de calibrage, les plaques de calibrage pouvant être pivotées dans le trajet de faisceau d'au moins une des unités de capture d'image en une sorte de mouvement pendulaire á des moments différents.

12. Dispositif selon la revendication 10, **caractérisé en ce que**
plusieurs plaques de calibrage sont formées comme ailettes d'une roue à ailettes, les plaques de calibrage pouvant être tournées successivement dans le temps au moins dans le trajet de faisceau d'au moins une des unités de capture d'image.

13. Dispositif selon la revendication 12, **caractérisé en ce que**
la roue à ailettes peut tourner à une vitesse angulaire constante.

14. Dispositif selon la revendication 12, **caractérisé en ce que**
la roue à ailettes peut tourner peu à peu.

15. Dispositif selon la revendication 6, **caractérisé en ce que**
le support de plaque de calibrage a plusieurs plaques de calibrage avec des radiateurs d'intensité de rayonnement égale qui sont prévues pour un calibrage à un point.

16. Dispositif selon la revendication 6, **caractérisé en ce que**
le support de plaque de calibrage a plusieurs plaques de calibrage avec des radiateurs différents qui sont prévues pour un calibrage à plusieurs points.

17. Dispositif selon la revendication 6, **caractérisé en ce que**
le support de plaque de calibrage a des plaques de calibrage en forme de surfaces de miroir qui permettent une réflexion de radiateurs disposés à côté des unités de capture d'image dans le trajet de faisceau de l'unité de capture d'image.

18. Dispositif selon la revendication 6, **caractérisé en ce que**
le support de plaque de calibrage a des plaques de calibrage en forme de filtres de transmission différente, qui sont prévues pour un calibrage relatif au moyen du rayonnement incident dans le trajet de faisceau d'image des unités de capture d'image.

19. Dispositif selon la revendication 1, **caractérisé en ce que**
l'au moins une plaque de calibrage est pourvue d'au moins une source lumineuse pour la génération d'un rayonnement de calibrage défini.

20. Dispositif selon la revendication 1, **caractérisé en ce que**
l'au moins une plaque de calibrage est revêtue d'une matière fluorescente qui est excitée par un radiateur disposé séparément et approprié pour la génération d'un rayonnement de calibrage défini.

21. Dispositif selon la revendication 1, **caractérisé en ce que**
l'au moins une plaque de calibrage est irradiée avec des radiateurs thermiques disposés séparément et appropriés.

22. Dispositif selon la revendication 1, **caractérisé en ce que**
l'au moins une plaque de calibrage est chauffée d'une manière électromagnétique.

23. Dispositif selon la revendication 1, **caractérisé en ce que**
l'au moins une plaque de calibrage est chauffée par la circulation d'un courant électrique.

24. Dispositif selon la revendication 1, **caractérisé en ce que**
un capteur de rayonnement est prévu pour mesurer l'intensité de rayonnement émise de l'au moins une plaque de calibrage.

25. Dispositif selon la revendication 24, **caractérisé en ce que**
un capteur de température est prévu pour mesurer la température de surface de l'au moins une plaque de calibrage.

26. Dispositif selon la revendication 25, **caractérisé en ce que**
au moins un corps noir pour calibrer le capteur de température IR est disposé de telle manière que le rayonnement dudit corps noir est réfléchit via une plaque de calibrage réfléchissante sur le capteur de température IR.

27. Dispositif selon la revendication 26, **caractérisé en ce que**
pour réfléchir le rayonnement du corps noir sur le capteur de température IR une ailette réfléchissante d'une roue à ailettes équipée de plaques de calibrage est prévue.

28. Dispositif selon la revendication 26, **caractérisé en ce que**
un capteur de température pour le mesurage direct de la température de surface est fixé sur l'au moins une plaque de calibrage.
